# EUROPEAN PATENT APPLICATION

(11) **EP 4 679 595 A1**
(43) Date of publication of application: **14.01.2026**
(21) Application number: 23927127.3
(22) Date of filing: 06.11.2023
(51) Int. Cl.: H01M 50/24, A01D 67/00

(54) **AUTONOMOUS OPERATION DEVICE**

(30) Priority: 10.03.2023 CN 202310246918; 11.04.2023 CN 202310378810; 11.04.2023 CN 202320847373 U; 11.04.2023 CN 202320797020 U; 11.04.2023 CN 202320802825 U; 11.04.2023 CN 202320843419 U; 11.04.2023 CN 202320783232 U
(71) Applicant: Zhejiang Sunseeker Industrial Co., Ltd., Jinhua, Zhejiang 321000 (CN)
(72) Inventor: RAN, Yuanzhong, Jinhua, Zhejiang 321000 (CN)
(74) Representative: Manna, Sara
(86) International application number: PCT/CN2023/130030
(87) International publication number: WO 2024/187786

(57) **Abstract**

The present disclosure discloses an autonomous operation device. The autonomous operation device includes a chassis and a cavity cover, where the chassis includes a first cover body and a second cover body, and the first cover body covers the second cover body to jointly form a battery pack cavity; the cavity cover operably opens and closes the battery pack cavity, and the battery pack cavity and the cavity cover are configured such that the cavity cover can prevent water from entering the battery pack cavity in both a closed and locked state and a closed and unlocked state. The present disclosure can prevent water from entering the battery pack cavity when the cavity cover is in the closed and unlocked state, improving the use safety of a battery pack.

## Description

The present disclosure claims priorities to the following patent applications, the contents of which are incorporated herein by reference in their entireties: Chinese Patent Application No. 2023102469183 filed with China National Intellectual Property Administration on March 10, 2023 and entitled "AUTONOMOUS OPERATION DEVICE", Chinese Patent Application No. 202310378810X filed with China National Intellectual Property Administration on April 11, 2023 and entitled "AUTONOMOUS OPERATION EQUIPMENT", Chinese Patent Application No. 2023208473737 filed with China National Intellectual Property Administration on April 11, 2023 and entitled "AUTONOMOUS OPERATION EQUIPMENT", Chinese Patent Application No. 2023207970200 filed with China National Intellectual Property Administration on April 11, 2023 and entitled "AUTONOMOUS OPERATION EQUIPMENT", Chinese Patent Application No. 202320802825X filed with China National Intellectual Property Administration on April 11, 2023 and entitled "AUTONOMOUS OPERATION EQUIPMENT", Chinese Patent Application No. 2023208434198 filed with China National Intellectual Property Administration on April 11, 2023 and entitled "AUTONOMOUS OPERATION EQUIPMENT", and Chinese Patent Application No. 2023207832323 filed with China National Intellectual Property Administration on April 11, 2023 and entitled "AUTONOMOUS OPERATION EQUIPMENT".

### TECHNICAL FIELD

The present disclosure relates to the field of robots, and in particular, to an autonomous operation device such as an automatic lawn mowing robot.

### BACKGROUND

An autonomous operation device is, in particular, a robot that can autonomously move in a preset area and perform a specific operation, typically such as an intelligent sweeper/vacuum cleaner performing a cleaning operation, or an intelligent lawn mower performing a lawn mowing operation. The autonomous operation device is generally equipped with a rechargeable battery pack.

In an existing autonomous operation device, the battery pack cavity that accommodates the battery pack and the main cavity that accommodates the control panel are independent sealed cavity structures, and the design presents the following problems: The battery pack cavity is prone to water ingress when the cavity cover is in a closed and unlocked state, leading to low safety. Since both the control panel and the battery pack generate heat during operation, separate waterproof breathable films are required for the battery pack cavity and the main cavity to balance the air pressure inside and outside the cavity without compromising the seal, resulting a high cost. During assembly, a wire needs to pass through a sealing plug first to form a component. For the assembly of the whole machine, the sealing plug component is mounted in a through hole, with one end connected to the control panel and the other to the wiring terminal. For a socket integrally formed with the chassis lower cover, due to the limited internal space of the machine, the operation space is narrow, and thus the connection between the wire and the wiring terminals is difficult. For a socket designed separately from the chassis lower cover, since the wire is fixed, if the wire needs to be connected to the wiring terminals before the socket is mounted, the wire needs to be lengthened, resulting in a high cost.

In addition, the battery pack of the existing autonomous operation device is customized in its model and specification, and the socket for mounting the battery pack is integrated with the battery pack cavity. Therefore, different molds need to be designed to adapt to battery packs with different specifications, resulting in high mold costs.

Moreover, the battery pack of the existing autonomous operation device is generally positioned between driving wheels (rear wheel) and a universal wheel (front wheel) to ensure that the front end does not tilt when the battery pack is replaced. However, this arrangement limits the spatial arrangement of the main cavity of the autonomous operation device, which is not favorable for the mounting of components in the main cavity.

### SUMMARY

The object of the present disclosure is to provide an improved autonomous operation device that solves at least one of the foregoing problems.

According to a first aspect of the present disclosure, the object is at least partially achieved by an autonomous operation device. The autonomous operation device includes a chassis and a cavity cover, where the chassis includes a chassis upper cover and a chassis lower cover, and the chassis upper cover operably covers the chassis lower cover to jointly form a battery pack cavity; the cavity cover operably opens and closes the battery pack cavity, and the battery pack cavity and the cavity cover are configured such that the cavity cover can prevent water from entering the battery pack cavity in both a closed and locked state and a closed and unlocked state. Therefore, the autonomous operation device with the characteristics can prevent water from entering the battery pack cavity when the cavity cover is in the closed and unlocked state, improving the use safety of the battery pack.

According to a second aspect of the present disclosure, the object is at least partially achieved by an autonomous operation device. The autonomous operation device includes a chassis, where the chassis includes a first cover body and a second cover body, and the first cover body covers the second cover body to jointly form a battery pack cavity. The autonomous operation device further includes a cavity cover, where the cavity cover is rotatably mounted at an opening of the battery pack cavity to close the battery pack cavity, the cavity cover includes a cavity cover upper cover and a cavity cover lower cover that may be fastened together, a concave portion and a water guide groove are provided on the cavity cover lower cover, a locking mechanism is mounted on the concave portion, the concave portion includes an unlocking key, a through hole for the unlocking key to movably pass through is formed on the cavity cover upper cover, a first end of the water guide groove communicates with the concave portion, and a second end of the water guide groove is located on a side edge of the cavity cover lower cover. Therefore, the autonomous operation device with the characteristics can prevent water from accumulating in the cavity cover, and further prevent water from entering the battery pack cavity, improving the use safety of the battery pack.

According to a third aspect of the present disclosure, the object is at least partially achieved by an autonomous operation device. The autonomous operation device includes a chassis, where the chassis includes a first cover body and a second cover body, the first cover body and the second cover body are fastened to jointly form a main cavity and a battery pack cavity, a battery pack is detachably mounted in the battery pack cavity, a control panel is mounted in the main cavity, and the main cavity communicates with the battery pack cavity, such that a wire between the battery pack and the control panel can be arranged in the main cavity and the battery pack cavity without sealing. Therefore, the autonomous operation device with the characteristics can eliminate the waterproof breathable film on the cavity cover, the threading sealing plug between cavities, and the sealing ring between the parts which are fastened to form the battery pack cavity, thereby saving the cost. In addition, because threading sealing is not needed, the assembling procedure is simplified, and the efficiency is high.

According to a fourth aspect of the present disclosure, the object is at least partially achieved by an autonomous operation device. The autonomous operation device includes a chassis, where the chassis includes a first cover body and a second cover body, and the first cover body covers the second cover body to jointly form a battery pack cavity. The autonomous operation device further includes a socket detachably mounted in the battery pack cavity, where the socket includes a body and an electrode plate holder disposed at a bottom of the body, a battery pack is detachably mounted on the body and electrically connected to the electrode plate holder, and the electrode plate holder is provided with wiring terminals electrically connected to a control panel of the autonomous operation device. Therefore, the autonomous operation device with the characteristics can be compatible with battery packs of various models and specifications, thereby saving the mold cost.

According to a fifth aspect of the present disclosure, the object is at least partially achieved by an autonomous operation device. The autonomous operation device includes a battery pack, a chassis, and a universal wheel and driving wheels respectively mounted at front and rear portions of the chassis, where the chassis includes a first cover body and a second cover body, the first cover body covers the second cover body to jointly forms a battery pack cavity, the battery pack is hermetically mounted in the battery pack cavity behind the driving wheels, and a lower end face of the battery pack is located below an axle of the driving wheels. Therefore, the autonomous operation device with the characteristics can lower the center of gravity of the autonomous operation device, prevent the front end of the machine from tilting when the battery pack is inserted, improve stability, and increase the volume of the main cavity.

The details of at least one embodiment are set forth in the accompanying drawings and the description below. Other characteristics, objects, and advantages will be apparent from the description, drawings, and claims.

### BRIEF DESCRIPTION OF THE DRAWINGS

FIG. 1 is a schematic perspective view of an autonomous operation device according to an embodiment of the present disclosure.
FIG. 2 is an exploded view of the autonomous operation device shown in FIG. 1.
FIG. 3 is an exploded view of a chassis upper cover assembly shown in FIG. 2.
FIG. 4 is a top view of the chassis upper cover assembly shown in FIG. 2.
FIG. 5 is a sectional view taken along X1-X1 in FIG. 4, in which a cavity cover is in an open state.
FIG. 6 is a sectional view taken along X2-X2 in FIG. 4, in which the cavity cover is in a closed and unlocked state.
FIG. 7 is a sectional view taken along X2-X2 in FIG. 4, in which the cavity cover is in a closed and locked state.
FIG. 8 is a schematic perspective view of a cavity cover lower cover of the chassis upper cover assembly shown in FIG. 2.
FIG. 9 is a schematic perspective view of a cavity cover upper cover shown in FIG. 2, showing primarily a lower surface thereof.
FIG. 10 is a schematic view of an unlocking key of the chassis upper cover assembly shown in FIG. 2.
FIG. 11 is a schematic view of locking tongues of the chassis upper cover assembly shown in FIG. 2.
FIG. 12 is a top view of the cavity cover of the chassis upper cover assembly shown in FIG. 2.
FIG. 13 is a sectional view taken along X3-X3 in FIG. 12.
FIG. 14 is a sectional view taken along X4-X4 in FIG. 12.
FIG. 15 is a schematic perspective view of a chassis lower cover shown in FIG. 2.
FIG. 16 is a schematic perspective view of a socket shown in FIG. 2, showing a face in butt joint with the chassis lower cover.
FIG. 17 is another schematic perspective view of the socket shown in FIG. 2, showing a face in butt joint with a battery pack.
FIG. 18 is a schematic perspective view of the battery pack shown in FIG. 2.
FIG. 19 is a sectional view taken along X5-X5 in FIG. 4, showing a section of the chassis lower cover and the chassis upper cover assembled together.
FIG. 20 is a top view of the chassis lower cover shown in FIG. 2, in which the socket is not included.
FIG. 21 is a sectional view taken along X6-X6 in FIG. 20.
FIG. 22 is a sectional perspective view taken along X7-X7 in FIG. 4.
FIG. 23 is a sectional view of the autonomous operation device shown in FIG. 1, in which a cutting assembly is located at a highest position.

### DETAILED DESCRIPTION

The objects, features, and advantages of the present utility model will be more clearly understood from the following detailed description of preferred embodiments of the present utility model in conjunction with the accompanying drawings. It should be understood that the embodiments shown in the drawings are not intended to limit the scope of the present utility model, but are merely intended to illustrate the essential spirit of the technical solutions of the present utility model. In the following description, for the purposes of explanation, some specific details are set forth in order to provide a thorough understanding of the various disclosed embodiments. However, those skilled in the related art will recognize that an embodiment can be practiced without one or more of the specific details. In other instances, well-known apparatuses, structures, and techniques associated with the present disclosure may not be shown or described in detail to avoid unnecessarily obscuring the description of the embodiments.

Reference throughout this specification to "one embodiment" or "an embodiment" means that particular features, structures, or characteristics described in conjunction with the embodiment are included in at least one embodiment. Therefore, the appearances of the phrase "in one embodiment" or "in an embodiment" in various places throughout this specification are not necessarily all referring to the same embodiment. Furthermore, the particular features, structures, or characteristics may be combined in any manner in one or more embodiments.

In the following description, for the purpose of clearly illustrating the structure and working manner of the present utility model, numerous directional terms are used for description, but the terms "front", "rear", "left", "right", "outer", "inner", "outward", "inward", "on", "under", etc. should be interpreted as words for convenience and should not be interpreted as limiting terms.

It should be understood that in the description of the specific embodiments of the present utility model, the terms "first", "second", and the like are used for descriptive purposes only and are not to be construed as indicating or implying relative importance or to implicitly indicate the number of technical features indicated. Therefore, features defined with "first" or "second" may explicitly or implicitly include one or more of the features.

In the specific embodiments of the present utility model, unless otherwise explicitly stated or limited, the terms "connected", "connection", and the like shall be construed broadly, and may be, for example, a fixed connection, a movable connection, a detachable connection, an integrated connection, a direct connection, an indirect connection through an intermediate medium, an internal communication of two elements, or an interaction between two elements. The specific meanings of the above terms in the present utility model can be understood according to specific situations by those of ordinary skill in the art.

Unless otherwise explicitly stated or defined in the specific embodiments of the present utility model, the recitation of a first feature "on" or "under" a second feature may include the recitation of the first and second features being in direct contact, and may also include the recitation that the first and second features are not in direct contact, but are in contact via another feature therebetween.

In the specific embodiments of the present utility model, the term "a plurality of" means two or more unless otherwise explicitly stated or limited.

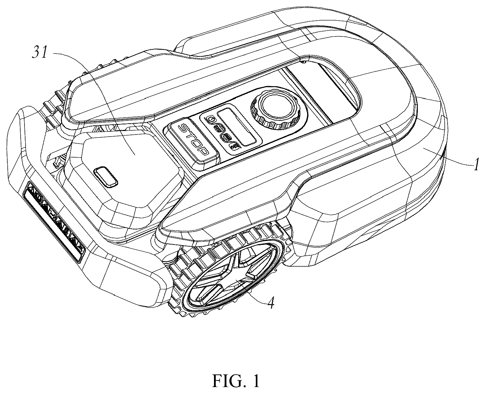

As shown in FIGs. 1, 2, and 23, this embodiment provides an autonomous operation device. The autonomous operation device is, in particular, a robot that can autonomously move in a preset area and perform a specific operation, typically such as an intelligent sweeper/vacuum cleaner performing a cleaning operation, or an intelligent lawn mower performing a lawn mowing operation. The specific operation, in particular, refers to an operation that processes a working surface and changes the state of the working surface. The present utility model will be described in detail by taking an intelligent lawn mower as an example. The autonomous operation device can autonomously walk on the surface of a working area, and in particular, as an intelligent lawn mower, can autonomously perform a lawn mowing operation on the ground. The autonomous operation device at least includes a main body mechanism, a moving mechanism, a working mechanism, an energy module, a detection module, an interaction module, a control module, and the like.

The main body mechanism generally includes a chassis and a housing 1. The chassis is configured to mount and accommodate functional mechanisms and functional modules, such as the moving mechanism, the working mechanism, the energy module, the detection module, the interaction module, and the control module. In this embodiment, the chassis includes a chassis lower cover 2 and a chassis upper cover assembly 3. The housing 1 is generally configured to at least partially cover the chassis, primarily to enhance the aesthetics and recognizability of the autonomous operation device. In this embodiment, the housing is configured to be capable of resettable translation and/or rotation relative to the chassis under an external force. In cooperation with a suitable detection module, such as a Hall sensor, the housing can further serve to detect events like collisions and lifting.

The moving mechanism is configured to support the main body mechanism on the ground and drive the main body mechanism to move on the ground, and generally includes a wheeled mechanism, a tracked or semi-tracked mechanism, and a walking mechanism. In this embodiment, the moving mechanism is a wheeled mechanism, including at least one driving wheel 4 and at least one traveling prime mover. The traveling prime mover is preferably an electric motor, and in other embodiments, may be an internal combustion engine or a machine that uses other types of energy sources to generate power. In this embodiment, a left driving wheel, a left traveling prime mover that drives the left driving wheel, a right driving wheel, and a right traveling prime mover that drives the right driving wheel are preferably provided. In this embodiment, the linear travel of the autonomous operation device is achieved by the rotation of the left and right driving wheels at the same speed in the same direction, and the steering travel is achieved by the rotation of the left and right driving wheels in the same direction at different speeds or in opposite directions. In other embodiments, the moving mechanism may further include a steering mechanism independent of the driving wheels and a steering prime mover independent of the traveling prime mover. In this embodiment, the moving mechanism further includes at least one driven wheel 5, typically configured as a universal wheel, and the driving wheel 4 and the driven wheel 5 are respectively located at the front and rear ends of the autonomous operation device.

The working mechanism is configured for performing a specific operation task and includes a working member and a working prime mover that drives the working member to operate. Exemplarily, for an intelligent sweeper/vacuum cleaner, the working member includes a roller brush, a dust collection tube, a dust collection chamber, and the like; for an intelligent lawn mower, the working member includes a cutting blade or cutting cutter head 6, and further includes other components for optimizing or adjusting the lawn mowing effect, such as a height adjustment mechanism for adjusting the lawn mowing height. The working prime mover is preferably an electric motor, and in other embodiments, may be an internal combustion engine or a machine that uses other types of energy sources to generate power. In some other embodiments, the working prime mover and the traveling prime mover are configured as the same prime mover.

The energy module is configured to provide energy for various work of the autonomous operation device. In this embodiment, the energy module includes a battery pack 7, preferably a rechargeable battery pack, and a charging connection structure, preferably a charging electrode, which may be exposed outside the autonomous operation device.

The detection module is configured as at least one sensor that senses an environmental parameter of the autonomous operation device or a working parameter of the detection module. Typically, the detection module may include sensors related to the definition of the working area, for example, sensors of magnetic-inductive, impact, ultrasonic, infrared, radio, and many other types, the type of sensor being adapted to the position and number of the corresponding signal generating apparatuses. The detection module may also include positioning navigation related sensors such as GPS positioning apparatuses, laser positioning apparatuses, electronic compasses, acceleration sensors, odometers, angle sensors, and geomagnetic sensors. The detection module may also include sensors related to its working safety, such as obstacle sensors, lift sensors, and battery pack temperature sensors. The detection module may also include sensors related to the external environment, such as ambient temperature sensors, ambient humidity sensors, light sensors, and rain sensors.

The interaction module is configured at least to receive control instruction information inputted by a user, transmit information requiring user perception, and communicate with other systems or devices to transmit and receive information. In this embodiment, the interaction module includes an input apparatus disposed on the autonomous operation device for receiving control instruction information inputted by a user, typically such as a control panel and an emergency stop key. The interaction module further includes a display screen, an indicator light, and/or a buzzer disposed on the autonomous operation device, enabling a user to perceive information through light or sound. In other implementations, the interaction module includes a communication module disposed on the autonomous operation device and a terminal device independent of the autonomous operation device, such as a mobile phone, a computer, and a network server. User control instruction information or other information may be inputted on the terminal device and reach the autonomous operation device via a wired or wireless communication module.

The control module may also be referred to as a control panel, a circuit board, a main board, or the like, and generally includes at least one processor and at least one non-volatile memory. The memory stores a pre-written computer program or an instruction set, and the processor, according to the computer program or the instruction set, controls the performance of movements, work, and the like of the autonomous operation device. Further, the control module can also control and adjust the corresponding actions of the autonomous operation device and modify parameters in the memory according to a signal of the detection module and/or a user control instruction.

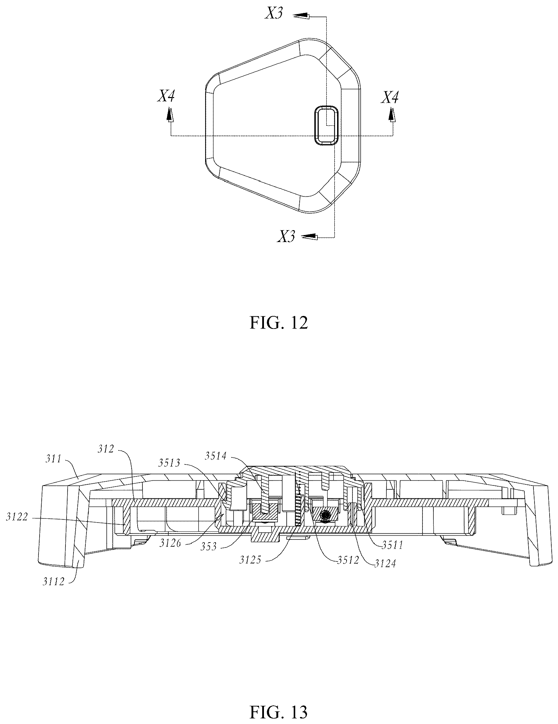

Referring to FIGs. 1 to 15, an autonomous operation device of the present utility model is described, which includes a chassis, a housing 1, and a cavity cover 31. The chassis includes a chassis lower cover (first cover body) 2 and a chassis upper cover (second cover body) 32. The chassis upper cover 32 covers the chassis lower cover 2 to jointly form a main cavity 20 and a battery pack cavity 21. It should be understood that the main cavity 20 and the battery pack cavity 21 may be formed by the first cover body and the second cover body that are fastened from left to right. A cavity cover 31 is mounted on the chassis upper cover 2, and operably opens and closes the battery pack cavity 21. The battery pack cavity 21 and the cavity cover 31 are configured such that the cavity cover 31 can prevent water from entering the battery pack cavity 21 in both a closed and locked state and a closed and unlocked state.

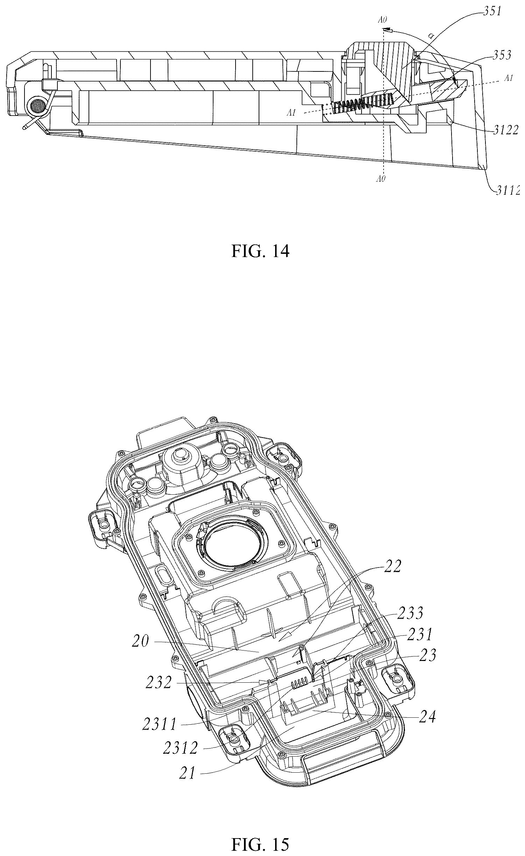

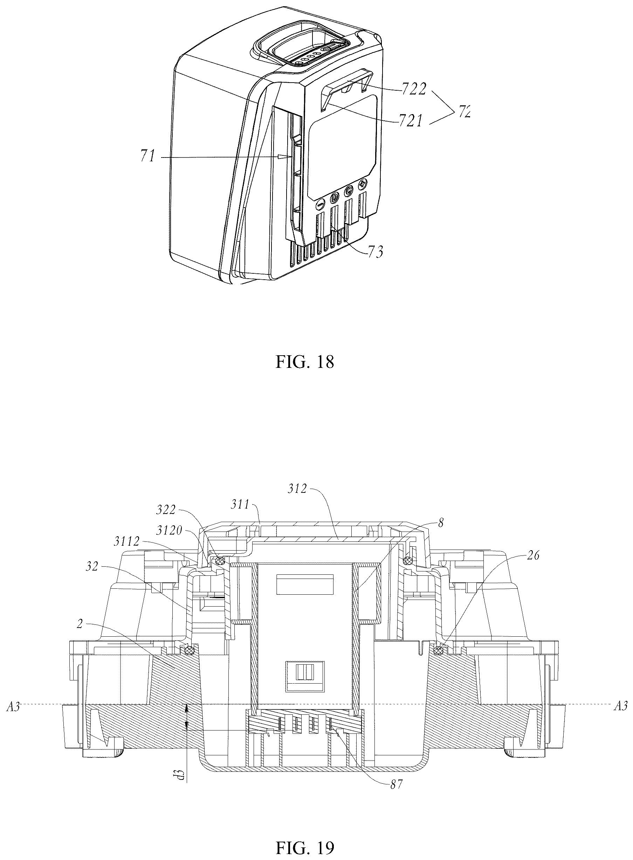

Specifically, the chassis lower cover 2 is provided with a concave cavity for mounting various components. The chassis lower cover 2 includes a lower cover plate and a lower side cover plate 25 integrally formed upward from the outer periphery of the lower cover plate. The lower side cover plate 25 is provided with a sealing ring mounting groove 251 and a plurality of lower fixing screw holes 252 located outside the sealing ring mounting groove 251. Accordingly, the chassis upper cover 32 includes an upper cover plate and an upper side cover plate 326 integrally formed downward from the outer periphery of the upper cover plate, and the upper side cover plate 326 is provided with a plurality of upper fixing screw holes 327. The chassis lower cover 2 and the chassis upper cover 32 are fastened to each other by the lower side cover plate 25 and the upper side cover plate 326, fixed by screwing screws into the upper fixing screw holes 327 and the lower fixing screw holes 252, and sealed by a sealing ring 26 (see FIG. 19) mounted in the sealing ring mounting groove 251. The chassis lower cover 2 and the chassis upper cover 32 are fastened to form the main cavity 20, and a control panel (not shown) is mounted in the main cavity 20, that is, a control panel mounting portion 22 is disposed in the main cavity 20. The battery pack cavity 21 is disposed at the rear portion of the chassis, and the main cavity 20 is located in front of the battery pack cavity 21. The battery pack cavity 21 is separated from the main cavity 20 by a partition wall 23 (see FIG. 15 for details). It should be understood that the battery pack cavity 21 may also be separately disposed on the chassis. The battery pack cavity 21 is in a substantially rectangular shape. The lower half of the battery pack cavity 21 is enclosed by the chassis lower cover 2 and the partition wall 23. The upper half of the battery pack cavity 21 is enclosed by the chassis upper cover 32, and is provided with an opening 211, that is, the opening 211 is formed on the chassis upper cover 32. The cavity cover 31 is rotatably mounted at the opening 211 of the battery pack cavity 21 of the chassis upper cover 32, such that the cavity cover 31 operably opens or closes the battery pack cavity 21. The periphery of the opening 211 of the battery pack cavity 21 is provided with a sealing groove 321, and a sealing ring 322 is mounted in the sealing groove 321. The sealing ring 322 may be any commercially available rubber sealing ring such as a nitrile rubber sealing ring, a silicone rubber sealing ring, or a neoprene rubber sealing ring. In this embodiment, the inner edge 3211 of the sealing groove 321 is higher than the outer edge 3212 of the sealing groove 321, for example, 1 to 2 mm higher.

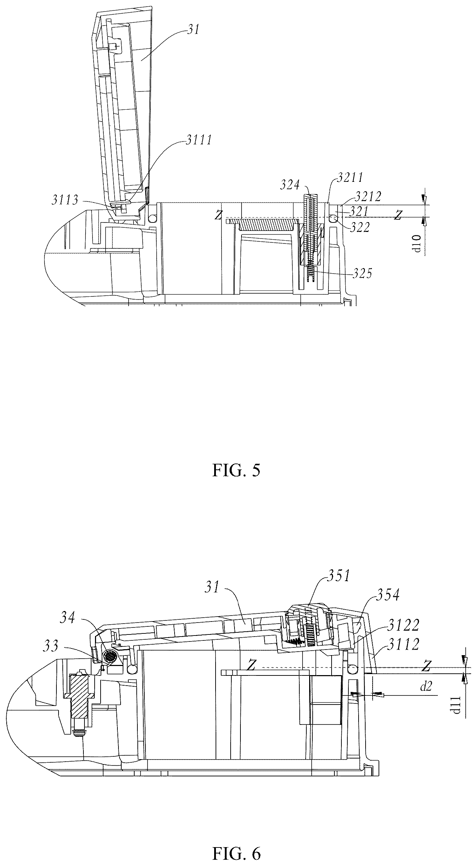

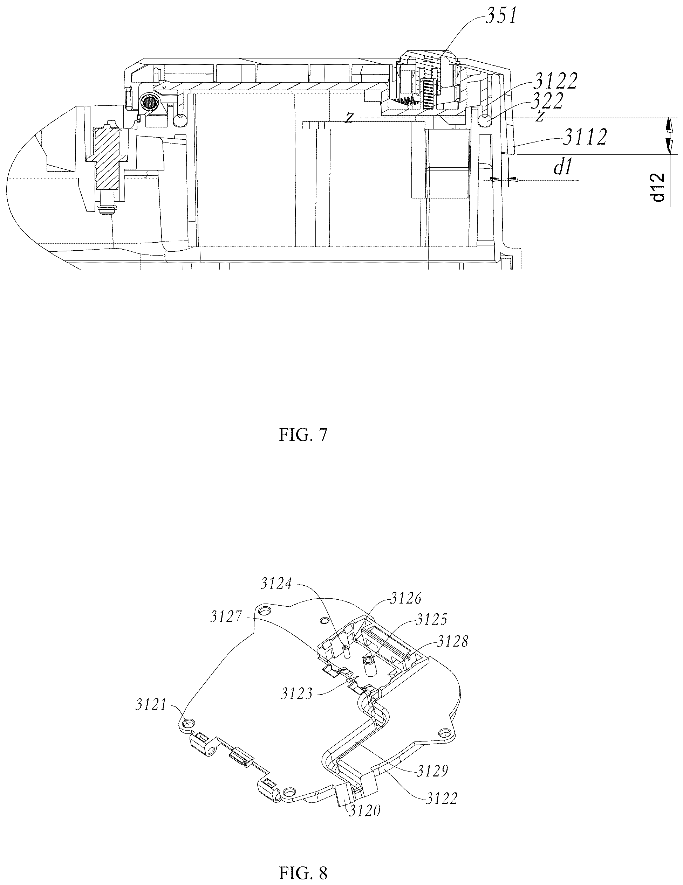

In this embodiment, the cavity cover 31 may be formed by fastening the cavity cover upper cover 311 and the cavity cover lower cover 312. Specifically, the lower surface of the cavity cover upper cover 311 is provided with a plurality (four shown) of clamping hooks 3111, and the cavity cover lower cover 312 is provided with a plurality (four shown) of clamping grooves 3121 in one-to-one correspondence to the plurality of clamping hooks 3111. The cavity cover upper cover 311 and the cavity cover lower cover 312 are fastened together by inserting the clamping hooks 3111 into the clamping grooves 3121. The clamping hooks 3111 are of a circular arc piece structure, and the clamping grooves 3121 are circular holes. It should be understood that the clamping hooks 3111 and the clamping grooves 3121 are not limited to the illustrated structures. The cavity cover lower cover 311 is rotatably connected to the chassis upper cover 32 by using a shaft 34 sleeved with a torsion spring 33. The outer periphery of the cavity cover upper cover 311 is provided with a shielding rim 3112 protruding downward. The outer periphery of the cavity cover lower cover 312 is provided with an annular sealing rim 3122 protruding downward, and the end of the sealing rim 3122 is configured as a convex structure. When the cavity cover 31 is closed and unlocked, as shown in FIG. 6, the sealing rim 3122 abuts against the sealing ring 322, and the shielding rim 3112 is located outside and lower than the outer edge of the sealing groove 321; when the cavity cover 31 is closed and locked, as shown in FIG. 7, the sealing rim 3122 presses against the sealing ring 322, and the shielding rim 3112 is located outside the outer edge of the sealing groove 321 and lower than a sealing face Z.

Therefore, through the waterproof battery pack cavity structure, even if the cavity cover 31 is in the closed and unlocked state, water can still be prevented from entering the battery pack cavity, such that the waterproof effects of the battery pack cavity 21 are greatly improved, and the IPX4 waterproof grade can be reached.

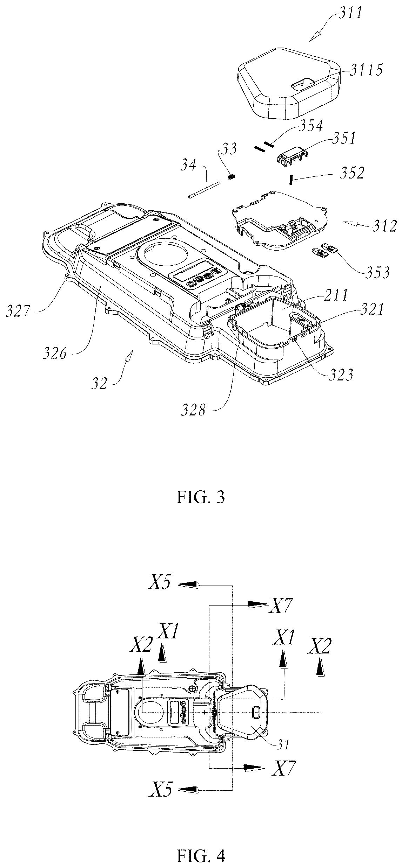

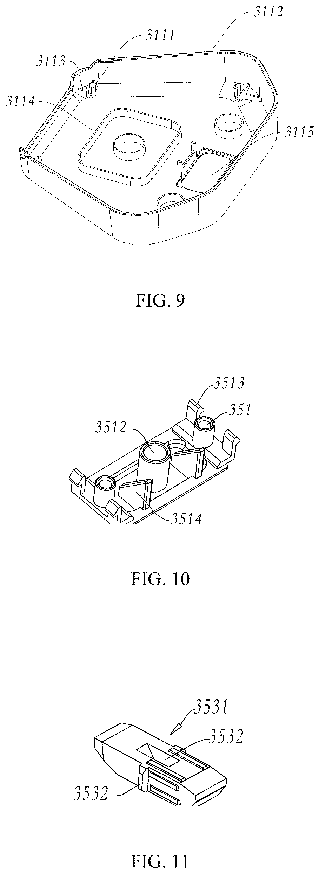

As shown in FIGs. 4 and 10, the cavity cover upper cover 311 is in a substantially isosceles trapezoidal shape, with two vertex angles being rounded angles, and two bottom angles being rounded angles chamfered in the middle. The size of the cavity cover upper cover 311 is larger than the size of the cavity cover lower cover 312, such that the cavity cover upper cover 311 covers the cavity cover lower cover 312 when fastened.

In this embodiment, a plurality of positioning ribs 3113 are disposed on the lower surface of the cavity cover upper cover 311, and the positioning ribs 3113 are connected to the clamping hooks 3111 for defining the height of the space between the cavity cover upper cover 311 and the cavity cover lower cover 312. Furthermore, a plurality of supporting ribs 3114 of different shapes (for example, cylindrical or rectangular) are further disposed on the lower surface of the cavity cover upper cover 311, and when the cavity cover upper cover 311 and the cavity cover lower cover 312 are fastened together, the supporting ribs 3114 abut against the upper surface of the cavity cover lower cover 312, such that the cavity cover upper cover 311 is prevented from being collapsed, and the strength of the cavity cover 31 is improved.

Referring to FIGs. 3 to 13, the cavity cover lower cover 312 is provided with a concave portion 3123 for mounting a locking mechanism 35. The concave portion 3123 is formed by concaving the bottom face of the cavity cover lower cover 312 downward, and is in a substantially rectangular shape. Two guide columns 3124 and a first spring fixing column 3125 located between the two guide columns 3124 are disposed in the concave portion 3123, one pair of side walls of the concave portion 3123 are each provided with two limiting grooves 3126, and the other pair of side walls are each provided with locking tongue spring mounting holes 3127 and locking tongue receiving holes 3128. The locking tongue receiving holes 3128 are aligned with locking holes 323 formed on the chassis upper cover 32. Specifically, the locking hole 323 is formed in the upward extending portion of the outer edge of the sealing groove 321. In this embodiment, the locking hole is a rectangular hole. The locking mechanism 35 may include an unlocking key 351, a key spring 352, locking tongues 353, and locking tongue springs 354. The cavity cover upper cover 311 is provided with a through hole 3115 for the unlocking key 351 to movably pass through. In this embodiment, the through hole 3115 is in a rectangular shape, and accordingly, the unlocking key 351 is of a rectangular key structure. Two guide sleeves 3511, a second spring fixing column 3512, four limiting hooks 3513, and two wedge-shaped columns 3514 are disposed on the lower surface of the unlocking key 351. The guide sleeves 3511 cooperate with the guide columns 3124 to define the movement path of the key. Specifically, the guide column 3124 is inserted into the guide sleeve 3511. The limiting hook 3513 of the unlocking key 351 cooperates with the limiting groove 3126 of the cavity cover lower cover 312 to define the extreme position of the upward movement of the unlocking key 351, such that the unlocking key 351 is prevented from being separated. The limiting hook 3513 has a certain elasticity to facilitate disassembly and assembly. The key spring 352 is limited by the first spring fixing column 3125 and the second spring fixing column 3512, and enables the unlocking key 351 to have an upward movement tendency. Specifically, the key spring 352 is inserted into the first spring fixing column 3125, and the second spring fixing column 3512 is sleeved outside the first spring fixing column 3125. The key spring 352 is generally a compression spring. The locking tongue 353 is provided with a through hole 3531, and one side face of the through hole 3531 is an inclined plane. The inclined plane of the locking tongue 353 cooperates with the inclined plane of the wedge-shaped column 3514 of the unlocking key 351. When the unlocking key 351 is pressed downward, the locking tongue 353 retracts to implement unlocking. A wing portion 3532 of the locking tongue 353 cooperates with the inner wall of the concave portion 3123 to limit the extreme position of the outward movement of the locking tongue 353. One end of the locking tongue spring 354 is mounted at the rear portion of the locking tongue 353 and the other end is mounted in the locking tongue spring mounting hole 3127 to enable the locking tongue 353 to have an outward movement tendency. The locking tongue spring 354 is generally a compression spring. The front portion of the locking tongue 353 has an inclined plane; when the cavity cover 31 is pressed downward, the locking tongue 353 retracts and the locking tongue spring 354 is compressed, and when the cavity cover 31 is in place, the locking tongue 353 extends through the locking hole 323 under the restoring force of the locking tongue spring 354, such that the cavity cover 31 is locked.

Preferably, the chassis upper cover 32 is further provided with a top column 324, and the bottom of the top column 324 is provided with a spring 325, such that the top column has an upward movement tendency. The top column 324 is configured to jack the cavity cover 31 up when the cavity cover 31 is unlocked.

In this embodiment, the unlocking key 351 moves along the direction of an axis A0 (i.e., the axial direction of the guide sleeve 3511 is A0), the locking tongue 353 moves along the direction of an axis A1, and there is an included angle α between the axis A0 and the axis A1. The included angle α is generally less than 90°; preferably, the included angle α is not less than 70°; more preferably, the included angle α is 80° ± 5°. Due to the tendency of the cavity cover 31 to be open, there is an increased pressure between the upper surface of the locking tongue and the locking hole of the chassis upper cover in this case. Such design enables the locking tongue to have downward displacement when retracting, and avoids seizure between the locking tongue and the locking hole of the chassis upper cover.

In some cases, the user may close the cavity cover 31 without locking, that is, the cavity cover 31 is in the closed and unlocked state, as shown in FIG. 6. In the prior art similar to the solution, water cannot be prevented from entering the battery pack cavity in this case (tested according to the IPX4 waterproof grade). In this embodiment, a sealing face Z is defined, which is tangent to the bottom end of the sealing rim 3122 when the cavity cover 31 is in the closed and locked state, as shown in FIG. 7. When the cavity cover 31 is in the closed and unlocked state, the bottom end of the shielding rim 3112 is lower than the sealing face Z. Therefore, water flows away along the shielding rim 3112 and does not enter the battery pack cavity 21. Specifically, a distance from the sealing face Z to the top end of the outer edge of the sealing groove 321 is defined as d10, as shown in FIG. 5, where d10 ≥ 1.5 mm; further, d10 ≥ 1.8 mm. A distance from the bottom end of the shielding rim 3112 on a side opposite to a rotation shaft 34 to the sealing face Z in the closed and unlocked state is defined as d11, as shown in FIG. 6, where d11 ≥ 0.5 mm; even further, d11 ≥ 1.0 mm. A distance from the bottom end of the shielding rim 3112 on the side opposite to the rotation shaft 34 to the sealing face Z in the closed and locked state is defined as d12, as shown in FIG. 7, where d12 ≥ 2.5 mm; even further, d12 ≥ 3 mm. d12/d11 > 2.0; further, d12/d11 ≥ 3.0; even further, d12/d11 ≥ 4.0. (d10 + d12)/d10 ≥ 2.5, and (d10 + d11)/d10 ≥ 1.2.

Further, a first gap d1 and a second gap d2 are defined. The maximum gap between the shielding rim 3112 and the outer edge of the sealing rim 3122 is the first gap d1 when the cavity cover 31 is in the closed and locked state, as shown in FIG. 6; the maximum gap between the shielding rim and the outer edge of the sealing rim is the second gap d2 when the cavity cover 31 is in the closed and unlocked state, as shown in FIG. 7. In this embodiment, d2/d1 is 1.3 to 2.0, preferably 1.5 to 1.7. In this embodiment, d1 is not less than 2 mm, and d2 is not greater than 5 mm. Preferably, d1 is 2 mm to 2.5 mm, and d2 is 3.5 mm to 4 mm.

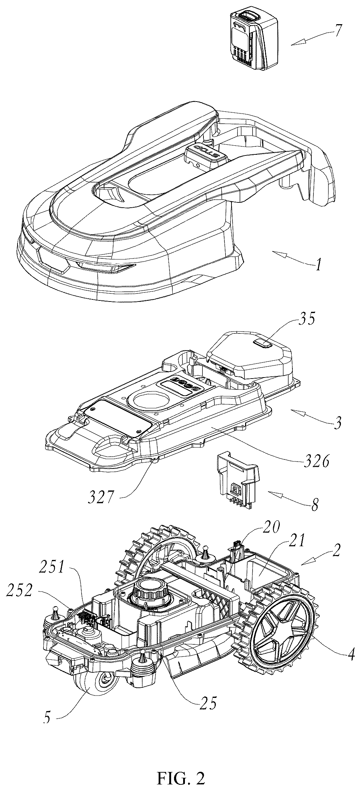

Further, referring to FIGs. 2, 3, 7, 8, and 19, there is a gap between the unlocking key 351 and the cavity cover upper cover 311. Typically, during rain, water may enter between the cavity cover upper cover 311 and the cavity cover lower cover 312. Since the cavity cover lower cover 312 is provided with the concave portion 3123, and thus water is easily accumulated, a water guide groove 3129 is formed in the cavity cover lower cover 312. The first end of the water guide groove 3129 communicates with the concave portion 3123, the second end of the water guide groove 3129 extends to the side edge of the cavity cover lower cover 312, and from the concave portion 3123 to the first end of the water guide groove 3129 and then to the second end of the water guide groove 3129, the height of the bottom face of the cavity cover lower cover is gradually reduced. Therefore, all water can be drained from the water guide groove 3129, and water will not be accumulated in the concave portion 3123. Preferably, the height of the bottom face of the second end of the water guide groove is lower than that of the first end by about 1 mm. In this embodiment, the first end of the water guide groove 3129 is located at the inner right corner of the concave portion 3123, and the water guide groove is provided with three right-angled bends. Preferably, each right-angled bend is a rounded angle. It should be understood that the first end of the water guide groove 3129 may be opened at other positions of the inner side wall of the concave portion 3123. Preferably, a hanging wall 3120 is disposed at the second end of the water guide groove 3129. The hanging wall 3120 is located outside the sealing rim 3122, and the lower end of the hanging wall 3120 is higher than the shielding rim 3112 and lower than the sealing face Z when the cavity cover 31 is closed and locked. For example, the lower end of the hanging wall 3120 is 1 to 2 mm lower than the sealing face Z and 0.5 to 1 mm higher than the lower end of the shielding rim 3112. Therefore, water does not enter the battery pack cavity 21. It should be understood that the upper surface of the cavity cover upper cover 311 may be covered with a waterproof film to prevent water from entering the cavity cover 31 through a gap between the unlocking key 351 and the cavity cover upper cover 311.

Preferably, as shown in FIG. 3, the surface of a chassis upper cover portion 328 outside the battery pack cavity 21 is an inclined plane, to allow water falling from the cavity cover 31 to flow away quickly. Specifically, a side on which the rotation shaft 34 is located is higher than the side opposite to the rotation shaft 34, for example, 0.5 to 1 mm higher.

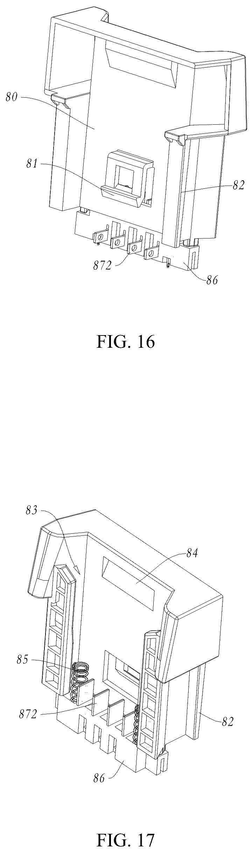

Further, referring to FIGs. 2, and 15 to 19, the autonomous operation device of the present utility model further includes a replaceable socket 8 for being compatible with battery packs of various models and specifications, thereby saving the mold cost. The socket 8 is detachably mounted in the battery pack cavity 21. Specifically, a socket mounting portion is disposed on the partition wall 23 of the chassis lower cover 2, which mainly includes a clamping portion 231 and fixing grooves 232 with an opening at the top. Accordingly, the back face (a face towards the partition wall 23) of the socket 8 is provided with a clamping hook 81 which cooperates with the clamping portion 231 of the chassis lower cover to enable the socket 8 to be immovable in a vertical direction. The outer side face of the clamping portion 231 is an inclined plane to facilitate the insertion of the clamping hook 81. Preferably, an included angle between the inclined plane of the clamping portion 231 and the horizontal plane is greater than 45°. In this embodiment, the clamping portion 231 includes a plurality of right-angled triangular rib plates 2311, the bottoms of the rib plates are integrally connected and through holes 2312 are formed therebetween, and specifically, only the bottom corners are connected, such that the clamping hook 81 can be ejected out conveniently by a tool to separate the clamping hook 81 from the clamping portion 231. It should be understood that the clamping portion 231 is not limited to the illustrated configuration. In this embodiment, the clamping hook 81 is formed on the back face of the socket 8 in a suspending manner, and has a certain elasticity. Specifically, the upper end (fixed end) of the clamping hook 81 is connected to the back face of the socket 8, the lower end (free end) is hook-shaped, and the main body of the clamping hook 81 is hollowed out (i.e., provided with a square hole). The clamping portion 231 and the clamping hook 81 have certain lengths and widths to ensure that they are not easily separated from each other. For example, the length is not less than 10 mm and the width is not less than 5 mm. Ribs 82 are disposed on two sides of the back face of the socket 8 to cooperate with the fixing grooves 232, and the ribs and the fixing grooves cooperate to limit the movement of the socket 8 in each horizontal direction. During the mounting of the socket 8, the ribs 82 of the socket 8 are aligned with and inserted into the fixing grooves 232; then the socket 8 is continuously moved downwards, and the clamping hook 81 contacts the clamping portion 231 and is pressed to the back face of the socket 8 by the clamping portion 231; after the socket 8 is mounted in place, the clamping hook 81 is clamped on the bottom of the clamping portion 231. The front face (a face facing away from the partition wall 23) of the socket 8 is provided with sliding grooves 83, a clamping groove 84, and springs 85. The sliding grooves 83 are located on two sides for cooperating with sliding bars 71 of the battery pack 7. The clamping groove 84 is located in the middle near the top, and specifically, a distance between the upper edge of the clamping groove 84 and the upper end of the socket is less than 1 cm. The clamping groove 84 cooperates with a clamping hook 72 of the battery pack 7 to fix the battery pack 7. In this embodiment, the clamping groove 84 is a rectangular groove, and the bottom face thereof is an inclined plane. The clamping hook 72 of the battery pack 7 includes a plurality (three shown) of rib plates 721 of an inverted right-angled triangular shape, and a top plate 722 connecting the rib plates 721. The springs 85 are mounted on an electrode plate mounting portion 86 near the sliding grooves 83 for ejecting the battery pack 7 after the battery pack 7 is unlocked. During the mounting of the battery pack 7, the sliding bars 71 are aligned with and inserted into the sliding grooves 83 and then are pressed down to the bottom, and the clamping hook 72 is clamped in the clamping groove 84, such that the mounting and fixation of the battery pack 7 are completed. The electrode plate mounting portion 86 is disposed at the bottom of the socket 8 for mounting electrode plates 87. The electrode plate 87 is L-shaped. The upper end of the electrode plate is a male terminal 871 configured to cooperate with a female terminal 73 of the battery pack in a plug-in manner, and the lower end thereof is a wiring terminal 872 that may be connected to the control panel (not shown) through a wire. According to the solution, when the autonomous operation device is adapted to a battery pack of a different model, only the socket 8 is to be replaced, and other structures do not need to be adjusted.

The electrode plate mounting portion 86 may be part of the socket 8 or may be a separate component. Preferably, the electrode plate mounting portion 86 is a separate component, referred to as an electrode plate holder 86. That is, the socket 8 includes a separate body 80 and the electrode plate holder 86. The body 80 and the electrode plate holder 86 are separately integrally formed. Accordingly, an electrode plate holder mounting portion 24 is disposed on the chassis lower cover 2 (specifically, the bottom of the battery pack cavity 21) for limiting the electrode plate holder 86, and the fixing grooves 232 are configured to limit the body 80 of the socket 8 in this case. During the mounting, the electrode plate holder 86 is mounted in the electrode plate holder mounting portion 24, the ribs 82 of the body 80 are inserted into the fixing groove 232, and the lower end of the body 80 presses against the electrode plate holder 86. Therefore, when the autonomous operation device is adapted to a battery pack of a different model, if only the female terminal 73 is configured differently, only the corresponding electrode plate holder 86 needs to be replaced; if only the sliding bar 71 is configured differently, only the body 80 needs to be replaced.

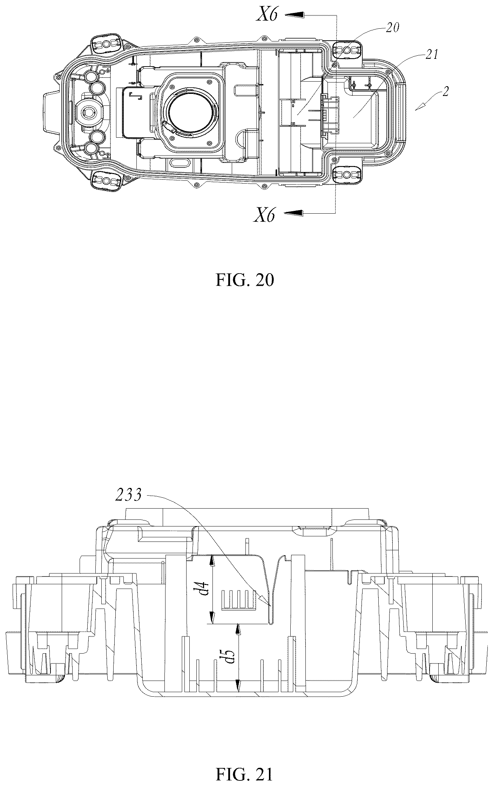

As shown in FIGs. 15, 16, and 20 to 22, in this embodiment, the battery pack cavity 21 communicates with the main cavity 20, such that a wire between the battery pack and the control panel can be arranged in the main cavity 20 and the battery pack cavity 21 without sealing. That is, there is no seal and/or sealing structure between the main cavity 21 and the battery pack cavity 20. Compared with the independently sealed battery pack cavity in the prior art, the waterproof breathable film on the cavity cover, the threading sealing plug between cavities, and the sealing ring between the parts which are fastened to form the battery pack cavity can be eliminated, saving the cost. Furthermore, assembly is simplified since no threading sealing is required.

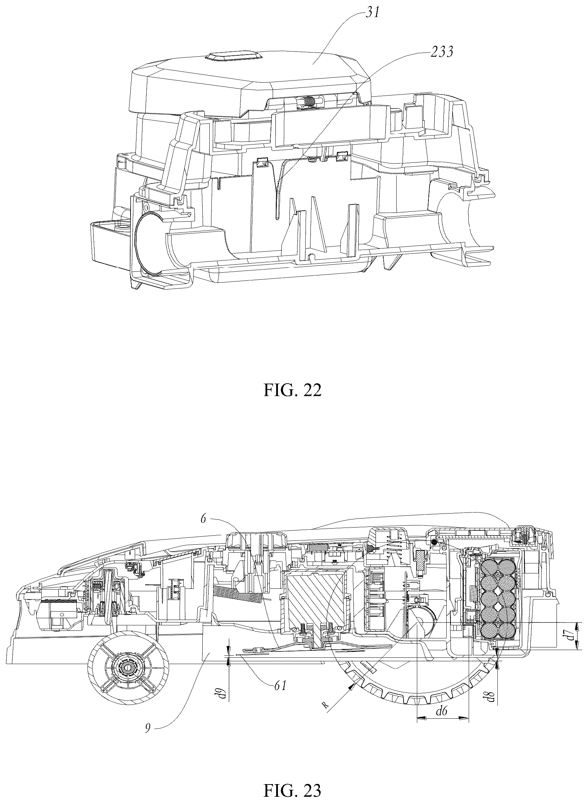

According to the solution, when the cavity cover 31 is in the closed and unlocked state, the waterproof effect under the IPX4 condition can be achieved. In this embodiment, the wire passage groove 233 is formed on the chassis lower cover 2, and the sealing between the battery pack cavity 21 and the main cavity 20 is eliminated. However, for some extreme cases, such as water (usually a very small amount of water) entering when the cavity cover 31 is open, the wire passage groove 233 formed on the partition wall 23 needs to have a certain height in order to prevent the control panel from being damaged by water entering the main cavity 20. In a specific embodiment, the depth d4 of the wire passage groove 233 is greater than or equal to 20 mm, and the height d5 from the bottom end of the wire passage groove 233 to the bottom face of the battery pack cavity 21 is greater than or equal to 30 mm, as shown in FIG. 22. It should be understood that the wire passage groove may also be formed on the chassis upper cover 32, or the upper and lower portions of the wire passage groove may be respectively formed on the chassis upper cover and the chassis lower cover. In consideration of the convenience of mounting, d4 is 30 mm to 50 mm, and d5 ≥ 40 mm. The opening of the wire passage groove 233 is flared outwardly to facilitate the entry of the wire. That is, the wire passage groove 233 includes an inverted splayed upper portion and a U-shaped lower portion. The upper portion and the lower portion have the substantially same height. The width of the wire passage groove 233 is substantially the same as the outer diameter of the wire, such that the wire can be caught in the wire passage groove 233 without loosening. It should be understood that the shape of the wire passage groove 233 is not limited to the illustrated embodiment, such as an arc-shaped groove or a rectangular groove. During the assembly, the control panel is first fixedly mounted in the control panel mounting portion 22 of the chassis lower cover 2, then one end of the wire (not shown) is connected to the wiring terminals 872 on the electrode plate holder 86 and the other end of the wire is a plug, and the electrode plate holder 86 is mounted in the electrode plate holder mounting portion 24. During the mounting, the wire is limited in the wire passage groove 233, the plug of the wire is then connected to the control panel, and finally, the body 80 is inserted into the fixing grooves 232. After completing the assembly of all other parts and components of the chassis lower cover, the chassis upper cover 32 and the chassis lower cover 2 are fastened and fixedly connected with screws, to complete the assembly of the machine body. The whole assembly process is very simple and efficient.

Referring to FIGs. 1 to 3, 19, and 21 to 23, the autonomous operation device according to the embodiments of the present utility model includes a detachable battery pack mounted at a specific position. Compared with the prior art, the volume of the main cavity can be maximized, and the arrangement of the center of gravity of the autonomous operation device is optimized. That is, on one hand, the center of gravity of the autonomous operation device is lowered, and on the other hand, the front end of the autonomous operation device is prevented from tilting when the battery pack is inserted. Specifically, the driving wheels 4 are located on two sides of the chassis, and the battery pack cavity 21 is located behind the driving wheels 4 and close to the tail of the chassis. A horizontal distance between left and right sides of the housing of the battery pack cavity 21 and the inner side of the driving wheel 4 is 3 to 8 cm. The battery pack 7 is hermetically mounted in the battery pack cavity 21, and the lower end face of the battery pack 7 is located below the axle of the driving wheels 4. In this embodiment, as shown in FIG. 19, a vertical distance between the lower end face of the electrode plate 87 and the axial center of the driving wheel 4 is defined as d3; as shown in FIG. 23, the radius of the driving wheel 4 is defined as R, a horizontal distance between the male terminal 871 (taking the central axis) and the axial center of the driving wheel 4 is defined as d6, a vertical distance between the lower end face of the battery pack 7 and the axial center of the driving wheel 4 is defined as d7, a vertical distance between the lower surface of the housing of the battery pack cavity 21 and a cutting face (a horizontal plane tangent to the lowest point of a blade 61 when a cutting mechanism is located at the highest position) is defined as d8, and a vertical distance between the lower surface of the housing of the battery pack cavity 21 and a protection face (a horizontal plane tangent to the lowest point of a cutter head shield 9 when the cutting mechanism is located at the highest position) is defined as d9.

The mounting position of the battery pack 7 is designed to meet the following relationships.
1. d6 being too large easily causes the front end of the machine to tilt when the battery pack 7 is mounted, and d6 being too small affects the space of the main cavity 20. When the electrode plate holder 86 is mounted in the battery pack cavity 21, the male terminal 871 is disposed behind the driving wheel 4 (that is, the driving wheel 4 is located between the universal wheel (driven wheel) 5 and the male terminal 871), and 25 mm ≤ d6 ≤ 70 mm, so as to ensure the sufficient space of the main cavity 20. Preferably, 40 mm ≤ d6 ≤ 60 mm. Furthermore, d6 relates to the size R of the driving wheel 4 and is generally designed as: 0.25 ≤ d6/R ≤ 0.7. Preferably, 0.4 ≤ d6/R ≤ 0.6.
2. The lower end face of the electrode plate 87 (i.e., the lower end face of the wiring terminal 871) is located below the axis of the driving wheel 4, and d3 ≥ 10 mm. Preferably, d3 ≥ 15 mm.
3. The lower end face of the mounted battery pack 7 is located below the axle of the driving wheels 4, and d7 ≥ 20 mm. Preferably, d7 ≥ 30 mm.
4. The lower the center of gravity of the battery pack 7, the better. Preferably, the center of gravity of the battery pack 7 is not higher than the axle of the driving wheels 4 or the center of gravity of the battery pack 7 is located no more than 50 mm above the axle of the driving wheels 4.
5. The lower surface of the housing of the battery pack cavity 21 is located between the cutting face and the protection face in the vertical direction, and 2 mm ≤ d8 ≤ 6mm. Such a design can ensure that the chassis has a certain height when the center of gravity is low, so as to ensure trafficability. Preferably, 3 mm ≤ d8 ≤ 5 mm. 2 mm ≤ d9 ≤ 5 mm. Preferably, d9 ≤ 3 mm.

Furthermore, in this embodiment, the upper surface of the housing (specifically, the cavity cover 31) of the battery pack cavity 21 is higher than the upper end of the driving wheel 4, for example, by 10 to 20 mm.

The preferred embodiments of the present utility model have been described in detail above, but it should be understood that various changes or modifications of the present utility model can be made by those skilled in the art after reading the above teachings of the present utility model. Such equivalents also fall within the scope of the appended claims of the present disclosure.

## Claims

1. An autonomous operation device, comprising a chassis and a cavity cover, wherein the chassis comprises a first cover body and a second cover body, and the first cover body covers the second cover body to jointly form a battery pack cavity; and the cavity cover operably opens and closes the battery pack cavity, and the battery pack cavity and the cavity cover are configured such that the cavity cover can prevent water from entering the battery pack cavity in both a closed and locked state and a closed and unlocked state.

2. The autonomous operation device of claim 0, wherein the battery pack cavity is provided with an opening located in the first cover body, a periphery of the opening is provided with a sealing groove, a sealing ring is mounted in the sealing groove, and the cavity cover is rotatably mounted at the opening and provided with an annular sealing rim and a shielding rim that protrude downward, wherein when the cavity cover is in the closed and unlocked state, the sealing rim abuts against the sealing ring and the shielding rim is located outside and lower than an outer edge of the sealing groove.

3. The autonomous operation device of claim 0, wherein an inner edge of the sealing groove is higher than the outer edge of the sealing groove.

4. The autonomous operation device of claim 0, wherein a sealing face is defined as that when the cavity cover is in the closed and locked state, the sealing face is tangent to a bottom end of the sealing rim; when the cavity cover is in the closed and unlocked state, a distance from a bottom end of the shielding rim on a side opposite to a rotation shaft of the cavity cover to the sealing face is d11; and when the cavity cover is in the closed and locked state, the distance from the bottom end of the shielding rim on the side opposite to the rotation shaft of the cavity cover to the sealing face is d12, wherein d12/d11 > 2.0; further, d12/d11 ≥ 3.0; and even further, d12/d11 ≥ 4.0.

5. The autonomous operation device of claim 4, wherein a distance from a top end of the outer edge of the sealing groove to the sealing face is d10, wherein (d10 + d12)/d10 ≥ 2.5, and (d10 + d11)/d10 ≥ 1.2.

6. The autonomous operation device of claim 0, wherein when the cavity cover is in the closed and unlocked state, a maximum gap between the shielding rim and the outer edge of the sealing groove is a second gap d2, wherein d2 ≤ 5 mm.

7. The autonomous operation device of claim 0, wherein when the cavity cover is in the closed and locked state, the maximum gap between the shielding rim and the outer edge of the sealing groove is a first gap d1, wherein d1 ≥ 2 mm.

8. The autonomous operation device of claim 7, wherein 1.3 ≤ d2/d1 ≤ 2.0; and further, 1.7 ≤ d2/d1 ≤ 1.7.

9. The autonomous operation device of claim 0, wherein the cavity cover comprises a cavity cover upper cover and a cavity cover lower cover that may be fastened together, the sealing rim is disposed on the cavity cover lower cover, and the shielding rim is disposed on the cavity cover upper cover.

10. The autonomous operation device of claim 0, wherein the cavity cover is rotatably mounted at an opening of the battery pack cavity to close the battery pack cavity, the cavity cover comprises a cavity cover upper cover and a cavity cover lower cover that may be fastened together, a concave portion and a water guide groove are provided on the cavity cover lower cover, a locking mechanism is mounted on the concave portion, the locking mechanism comprises an unlocking key, a through hole for the unlocking key to movably pass through is formed in the cavity cover upper cover, a first end of the water guide groove communicates with the concave portion, and a second end of the water guide groove is located on a side edge of the cavity cover lower cover.

11. The autonomous operation device of claim 0, wherein an outer periphery of the cavity cover lower cover protrudes downward to form a sealing rim and an outer periphery of the cavity cover upper cover protrudes downward to form a shielding rim, the shielding rim is outside and lower than the sealing rim, a hanging wall is disposed at the second end of the water guide groove, the hanging wall is located outside the sealing rim, and when the cavity cover is closed and locked, a bottom end of the hanging wall is higher than a bottom end of the shielding rim and lower than a sealing face, wherein the sealing face is defined as that when the cavity cover is in the closed and locked state, the sealing face is tangent to a bottom end of the sealing rim.

12. The autonomous operation device of claim 0, wherein the bottom end of the hanging wall is 1 mm to 2 mm lower than the sealing face and 0.5 mm to 1 mm higher than the bottom end of the shielding rim.

13. The autonomous operation device of claim 0, wherein the battery pack cavity is provided with the opening located in the first cover body, a periphery of the opening is provided with a sealing groove, a sealing ring is mounted in the sealing groove, and the sealing groove is provided with a notch which gives way to the hanging wall.

14. The autonomous operation device of claim 0, wherein the locking mechanism further comprises locking tongues, an upward extending portion of an outer edge of the sealing groove is provided with locking holes, the locking tongue is operably inserted into and separated from the locking hole, and an included angle α between a moving direction of the unlocking key and a moving direction of the locking tongue is less than 90°.

15. The autonomous operation device of claim 0, wherein the first cover body and the second cover body are fastened to jointly form a main cavity, a control panel is mounted in the main cavity, and the main cavity communicates with the battery pack cavity, such that a wire between a battery pack and the control panel can be arranged in the main cavity and the battery pack cavity without sealing.

16. The autonomous operation device of claim 0, wherein the main cavity is separated from the battery pack cavity by a partition wall, the partition wall is provided with a wire passage groove, the wire passes through the wire passage groove, the wire passage groove is formed in the second cover body, a height d5 from a bottom end of the wire passage groove to a bottom face of the battery pack cavity is greater than or equal to 30 mm, and a depth d4 of the wire passage groove is greater than or equal to 20 mm.

17. The autonomous operation device of claim 0, further comprising a socket detachably mounted in the battery pack cavity, wherein the socket comprises a body and an electrode plate holder disposed at a bottom of the body, a battery pack is detachably mounted on the body and electrically connected to the electrode plate holder, and the electrode plate holder is provided with wiring terminals electrically connected to a control panel of the autonomous operation device.

18. The autonomous operation device of claim 0, wherein the body and the electrode plate holder are both separate components, an electrode plate holder mounting portion is disposed on a bottom of the battery pack cavity, the electrode plate holder mounting portion is configured to limit the electrode plate holder, and a side of the electrode plate holder mounting portion away from the battery pack is open to give way to the wiring terminals of the electrode plate holder.

19. The autonomous operation device of claim 0, wherein the electrode plate holder is provided with male terminals, the male terminal and the wiring terminal integrally form an electrode plate, and the electrode plate is L-shaped; an inner wall of the battery pack cavity is provided with fixing grooves and a clamping portion, wherein the fixing grooves are formed in two sides, and the clamping portion is disposed between the two fixing grooves; a clamping hook in cooperation with the clamping portion is disposed on a first face of the body, such that the socket is unmovable in a vertical direction, and ribs in cooperation with the fixing grooves are disposed on two sides of the first face of the body to limit movement of the socket in each horizontal direction; and the battery pack is detachably mounted on a second face of the body and electrically connected to the male terminals, and the second face is opposite to the first face.

20. The autonomous operation device of claim 0, comprising a battery pack and a universal wheel and driving wheels respectively mounted at front and rear portions of the chassis, wherein the battery pack is hermetically mounted in the battery pack cavity behind the driving wheels, and a lower end face of the battery pack is located below an axle of the driving wheels.

21. The autonomous operation device of claim 0, wherein male terminals of the battery pack face the driving wheels, and a horizontal distance between the male terminal and an axial center of the driving wheel is d6, wherein 25 mm ≤ d6 ≤ 70 mm, 0.25 ≤ d6/R ≤ 0.7, and R is a radius of the driving wheel.

22. The autonomous operation device of claim 0, wherein a lower surface of a housing of the battery pack cavity is located between a cutting face and a protection face in a vertical direction, and 2 mm ≤ d8 ≤ 6 mm, wherein the cutting face is a horizontal plane tangent to a lowest point of a blade when a cutting mechanism is located at a highest position, the protection face is a horizontal plane tangent to a lowest point of a cutter head shield when the cutting mechanism is located at the highest position, and d8 is a vertical distance between the lower surface of the housing of the battery pack cavity and the cutting face; and a vertical distance between the lower surface of the housing of the battery pack cavity and the protection face is d9, wherein 2 mm ≤ d9 ≤ 5 mm.

23. The autonomous operation device of claim 0, wherein a horizontal distance between left and right side faces of a housing of the battery pack cavity and an inner side of the driving wheel is 30 to 80 mm.
